# EUROPÄISCHE PATENTSCHRIFT

(11) **EP 2 912 330 B1**
(45) Veröffentlichungstag und Bekanntmachung des Hinweises auf die Patenterteilung: **17.08.2016**
(21) Anmeldenummer: 13785350.3
(22) Anmeldetag: 08.10.2013
(51) Int. Cl.: F16D 13/75

(54) **ANTRIEBSKLINKE FÜR EINE VERSCHLEISSNACHSTELLENDE REIBKUPPLUNG**
DRIVING PAWL FOR A WEAR-COMPENSATING FRICTION CLUTCH
CLIQUET D'ENTRAÎNEMENT POUR EMBRAYAGE À FRICTION À RATTRAPAGE D'USURE

(30) Priorität: 24.10.2012 DE 102012219369
(43) Veröffentlichungstag der Anmeldung: 02.09.2015
(73) Patentinhaber: Schaeffler Technologies AG & Co. KG, 91074 Herzogenaurach (DE)
(72) Erfinder: SCHNEIDER, Michael, 76534 Baden-Baden (DE)
(86) Internationale Anmeldenummer: PCT/DE2013/200205
(87) Internationale Veröffentlichungsnummer: WO 2014/063697

(56) Entgegenhaltungen:
- DE-A1-102008 051 100
- FR-A1- 2 774 442
- FR-A1- 2 791 746
- US-A1- 2001 009 215

## Beschreibung

Die vorliegende Erfindung betrifft eine Reibkupplung gemäß dem Oberbegriff des Patentanspruchs 1.

Bei einer Reibkupplung ist in dem Reibpaket zur Übertragung eines Drehmoments mittels Reibflächen zumindest ein verschleißender Reibbelag vorgesehen. Über die Dauer des Betriebs der Reibkupplung nimmt somit die Dicke des zumindest einen Reibbelags ab und der Abstand der Elemente im Reibpaket vergrößert sich. Um dennoch einen konstanten Einrückweg beziehungsweise Ausrückweg, kurz Schaltweg, beim Schalten der Reibkupplung zu gewährleisten, sind verschiedene Verschleißnachstelleinrichtungen bekannt, die einen Verschleiß des zumindest einen Reibbelags ausgleichen. Hierzu ist zwischen dem Einrückmechanismus beziehungsweise Ausrückmechanismus, kurz Schaltmechanismus, und der Anpressplatte, welche gegen eine Gegenplatte gepresst wird, ein Rampenring vorgesehen. Der Rampenring weist dabei eine erste Rampe auf, die auf einer korrespondierenden zweiten Rampe aufliegt, so dass die Gesamthöhe des Rampenrings veränderlich ist. Der Rampenring wird in sich verdreht und dadurch der Abstand zwischen der Anpressplatte und der Gegenplatte gemäß der Abnahme der Dicke des Reibbelags verändert. Um diesen Rampenring gekoppelt an die Abnahme der Dicke anzutreiben, sind verschiedene Verschleißnachstellantriebe bekannt. Ein besonders bevorzugter Verschleißnachstelleantrieb weist einen Schneckenantrieb auf, der mit einer Zahnstange zusammenwirkt. Damit wird der Rampenring um die Verdrehung des Schneckentriebs entsprechend dem vorliegenden Verschleiß bewegt. Ein Antriebsritzel mit einer Freilaufverzahnung treibt den Schneckentrieb an, welches Antriebsritzel wiederum mit einer Antriebsklinke angetrieben wird. Verändert sich der Schaltweg, so wird die Antriebsklinke über die Freilaufverzahnung bewegt, und treibt somit bei der Rückbewegung oder beim nächsten Einrücken in einem benachbarten Zahn der Freilaufverzahnung und verdreht so das Antriebsritzel und damit den Schneckentrieb. Somit ist es möglich, direkt mit dem sensierten veränderten Schaltweg eine angepasste Veränderung des Abstands zwischen dem Schaltmechanismus und der Anpressplatte mittels Verdrehens des Rampenrings umzusetzen.

Im Stand der Technik wird die Antriebsklinke mit einem Bauteil der Reibkupplung befestigt und die Lage der Antriebsklinke über einen Anschlag justiert, wobei dieser Anschlag zugleich den Anschlag für den Schaltmechanismus bildet. Nachteilig ist hierbei, dass die Klinkenposition des Antriebsritzels von der Winkellage des Schaltmechanismus im geschlossenen Zustand der Reibkupplung bestimmt ist. Dabei gehen sämtliche Höhentoleranzen der Reibkupplung sowie der gespannten Kupplungsscheibendicke ein.

Eine Reibkupplung gemäß dem Oberbegriff des Patentanspruchs 1 ist aus der DE 10 2008 051 100 A1 bekannt.

Der vorliegenden Erfindung liegt die Aufgabe zugrunde, die aus dem Stand der Technik bekannten Nachteile zumindest teilweise zu überwinden.

Die Aufgabe wird erfindungsgemäß durch Patentanspruch 1 gelöst. Vorteilhafte Weiterbildungen sind Gegenstand der abhängigen Patentansprüche.

Die Antriebsklinke weist einen Klinkenabschnitt zum Eingreifen in ein Antriebsritzel, einen Befestigungsabschnitt zum Befestigen an einer axial fixierten Kupplungskomponente und einen Anschlagabschnitt zum Definieren der Position des Klinkenabschnitts auf, wobei der Anschlagabschnitt einen ersten Anschlag und einen zweiten Anschlag umfasst, wobei der erste Anschlag eine Position relativ zu einer axial fixierten Kupplungskomponente definiert und der zweite Anschlag dazu eingerichtet ist, mit einer Betätigungseinrichtung zusammenzuwirken.

Die Antriebsklinke ist vorzugsweise ein Blechteil, welches aus einem Federstahl gebogen wird. Sie ist dazu eingerichtet, ein Antriebsritzel mit einer Freilaufverzahnung infolge einer Veränderung des Schaltwegs in einer verschleißnachstellenden Reibkupplung anzutreiben. Hierzu weist sie einen Klinkenabschnitt auf, der eingerichtet ist in einen Zahngrund der Freilaufverzahnung einzugreifen. Weiterhin ist die Antriebsklinke über einen Befestigungsabschnitt, zum Beispiel eine Verschraubungsvorrichtung, zur Befestigung an einer axial fixierten Kupplungskomponente der Reibkupplung ausgestattet. Die axial fixierte Kupplungskomponente kann dabei ein Kupplungsgehäuse sein. Der Anschlagabschnitt weist einen ersten und einen zweiten Anschlag auf, die jeweils getrennt voneinander justiert werden können. Über den ersten Anschlag wird die Position des Klinkenabschnitts relativ zu einer axial fixierten Kupplungskomponente definiert. Der zweite Anschlag ist dazu eingerichtet, mit einer Betätigungseinrichtung zusammenzuwirken. Somit können die Positionen des Klinkenabschnitts und die relative Position zur Betätigungseinrichtung getrennt voneinander eingerichtet werden. Eine Abhängigkeit von den Toleranzen der Reibkupplung ist somit nicht gegeben.

Gemäß einer weiteren vorteilhaften Ausführungsform der Antriebsklinke ist der zweite Anschlag mittels einer Lasche im Bereich des ersten Anschlags gebildet.

Die Antriebsklinke ist aus einem Federstahlblechstreifen geformt. Die Antriebsklinke liegt mit ihrem Anschlagsabschnitt in einem äußeren Bereich an einer axial fixierten Kupplungskomponente an und in einem mittigen Bereich wirkt die Betätigungseinrichtung auf den Anschlagabschnitt. Bei einer solchen Konfiguration nach der Erfindung wird in diesem mittleren Bereich durch Ausstanzen eine Lasche im Bereich des ersten Anschalgs geformt, welche über den ersten Anschlag hinausragt. Es sind aber auch andere nicht erfindungsgemäßen Konfigurationer und Anordnungen einer Lasche in anderen Bereichen des ersten Anschlags möglich, beispielsweise kann der erste Anschlag mittig angeordnet sein und die Lasche jeweils rechts und/oder links zum ersten Anschlag. Unabhängig von der Anordnung einer solchen Lasche kann diese zum Beispiel über ihre Länge und/oder über ihren Neigungswinkel in ihrer Höhe eingerichtet werden.

Die Verschleißnachstelleinrichtung zum Ausgleichen von Reibbelagabrieb weist zumindest die folgenden Komponenten auf:
- einen Antrieb zum Verdrehen eines Rampenrings mit einer Gesamthöhe, wobei ein erstes Rampenelement und ein zweites Rampenelement auf einer Anpressplatte angeordnet sind, welche Rampenelemente derart zusammenwirken, dass bei einer relativen Verdrehung der Rampenelemente gegeneinander die Gesamthöhe veränderlich ist, so dass ein maximaler Schaltweg nahezu konstant bleibt;
- ein Antriebsritzel mit Freilaufverzahnung zum Bewegen des Antriebs;
- eine Antriebsklinke gemäß der obigen Beschreibung zum Eingreifen in die Freilaufverzahnung, wobei die Antriebsklinke derart angeordnet ist, dass beim Überschreiten eines maximalen Schaltwegs das Antriebsritzel in Freilaufrichtung verdreht wird.

Die Verschleißnachstelleinrichtung ist dazu eingerichtet, den Schaltweg einer Reibkupplung trotz einer Abnahme der Reibbelagdicke infolge von Verschleiß konstant zu halten. Hierzu ist ein Antrieb vorgesehen, welcher einen Rampenring antreibt. Dieser Rampenring setzt sich aus zwei Rampenelementen zusammen, die eine Gesamthöhe bilden, und die zueinander derart verdreht werden können, dass die Gesamthöhe veränderlich ist. Somit bleibt ein maximaler Schaltweg zum Anpressen der Anpressplatte gegen einen Reibbelag (zumindest nahezu) konstant. Der Schaltweg kann in einigen Konfigurationen insofern nur nahezu konstant bleiben, als eine Abweichung von der Sollschaltweglänge vorliegen muss, damit diese sensiert wird und eine Nachregelung stattfinden kann. Weiterhin können aufgrund von Toleranzen und diskreten Schaltschritten Abweichungen von einem konstanten maximalen Schaltweg vorliegen. In der Verschleißnachstelleinrichtung ist ein Antriebsritzel vorgesehen, welches mit einer Freilaufverzahnung versehen ist und welches den Antrieb bewegt. Zum Beispiel kann das Antriebsritzel einen Schneckentrieb verdrehen, welcher wiederum in eine Zahnstange des Antriebs eingreift. Das Antriebsritzel wiederum wird über eine Antriebsklinke angetrieben, welche in die Freilaufverzahnung des Antriebsritzels eingreift. Eine Betätigungseinrichtung zum Bewegen der Anpressplatte wirkt zugleich auf die Antriebsklinke. Verlängert sich der Weg beim Schalten, so überspringt die Antriebsklinke beziehungsweise der Klinkenabschnitt einen Zahn, greift in einen nächsten Zahngrund der Freilaufverzahnung ein und dreht das Antriebsritzel somit bei der Rückkehrbewegung vorwärts, das heißt in Freilaufrichtung. Zur Begrenzung der maximalen Bewegung der Antriebsklinke ist ein erster Anschlag vorgesehen. Zur Betätigung der Antriebsklinke ist ein zweiter Anschlag vorgesehen. Diese sind gemäß der obigen Beschreibung eingerichtet. Somit sind die Funktionen der Begrenzung des maximalen Hubs der Antriebsklinke und die Betätigung der Antriebsklinke voneinander getrennt und somit auch voneinander getrennt einrichtbar.

Gemäß einer weiteren vorteilhaften Ausführungsform der Verschleißnachstelleinrichtung wird eine Verstellung des Antriebsritzels über einen elastischen Speicher beim Einrücken gespeichert und beim Ausrücken in eine Verdrehung des Rampenrings umgesetzt, wobei der Rampenring beim Einrücken geklemmt und beim Ausrücken gelöst ist.

Gemäß dieser vorteilhaften Ausführungsform wird das Antriebsritzel beim Einrücken angetrieben, so dass ein Verdrehen des Antriebs stattfindet. In diesem Zustand wird aber die Kraft von dem Schaltmechanismus auf die Anpressplatte über den Rampenring übertragen, so dass eine Verdrehung infolge der Klemmung nicht stattfinden kann. Somit wird diese Nachstellbewegung in einen elastischen Speicher, zum Beispiel einer Feder, gespeichert und erst beim Ausrücken, wenn der Rampenring entlastet wird, können die beiden Rampenelemente gegeneinander verdreht werden. Der elastische Speicher hat dabei den Vorteil, dass er ebenfalls das Verdrehen des Rampenrings in Nachstellrichtung unterstützt und eine Gegendrehung verhindert.

Gemäß einer weiteren vorteilhaften Ausführungsform der Verschleißnachstelleinrichtung ist die Antriebsklinke an einem der beiden Rampenelemente angeordnet, bevorzugt an dem angetriebenen Rampenelement.

Durch das Anordnen der Antriebsklinke an einem der beiden Rampenelemente ist die Position der Antriebsklinke sowohl axial als auch radial geeignet fixiert, so dass keine unerwünschte Relativbewegung zwischen der Betätigungseinrichtung und der Antriebsklinke stattfindet. Besonders bevorzugt ist die Antriebsklinke dabei an dem angetriebenen Rampenelement angeordnet, so dass keine Veränderung des axialen Abstands zwischen den angetriebenen Rampenelement und der Antriebsklinke stattfindet. Somit kann auch der übrige Antrieb hieran angeordnet werden.

Die Reibkupplung zum lösbaren Verbinden einer Eingangswelle mit einer Ausgangswelle, welche eine Verschleißnachstelleinrichtung gemäß der obigen Beschreibung umfasst, ist durch Ziehen oder Drücken einer Anpressplatte mittels einer Tellerfeder lösbar oder schließbar.

Über die Eingangswelle wird ein Drehmoment für die Ausgangswelle bereitgestellt, wobei die Reibkupplung mittels einer Anpressplatte und einer Gegenplatte der Eingangswelle mit der Ausgangswelle lösbar verbinden kann. Aber auch ein umgekehrter Drehmomentverlauf von der Ausgangswelle auf die Eingangswelle ist durch die Reibkupplung übertragbar. Die Verbindung wird reibschlüssig geschlossen, häufig wird zwischen der Anpressplatte und der Gegenplatte eine relative Rotationsgeschwindigkeit vorliegen, wobei ein Reibbelag zwischen der Anpressplatte und einer Gegenplatte verschleißen kann. Eine entsprechende Nachstellung Wird von der oben beschriebenen Verschleißnachstelleinrichtung vorgenommen. Diese Verschleißnachstelleinrichtung kann dabei bei einer Reibkupplung eingesetzt werden, bei der die Anpressplatte gedrückt oder gezogen wird, und die normal geschlossen oder normal offen ist. Das heißt, der Schaltmechanismus, hier eine Tellerfeder, wird zentral (nahe des Rotationszentrums) in Richtung der Anpressplatte und in entgegengesetzter Richtung gezogen. Je nach Art der Übertragung dieser Kraft über einen Hebelpunkt, der zwischen der Kontaktstelle und der Anpressplatte oder vom Rotationszentrum gesehen unter dieser Kontaktstelle angeordnet ist, wird dann die Anpressplatte durch diese Betätigung entgegen einer dauerhaft anliegenden Federkraft eingerückt oder ausgerückt. Für den Einsatz einer jeweiligen Konfiguration muss die Verschleißnachstelleinrichtung lediglich durch eine veränderte Positionierung auf der Anpressplatte an die Wirkungsumkehr angepasst werden. Damit ist die Verschleißnachstelleinrichtung anderen bekannten Systemen überlegen, die jeweils nur für eine Wirkweise der Reibkupplung einsetzbar sind.

Gemäß einer weiteren vorteilhaften Ausführungsform der Reibkupplung ist der Antrieb der Verschleißnachstelleinrichtung an einem Deckel der Reibkupplung fixiert.

Bei einer solchen Konfiguration der Reibkupplung kann keine relative Verlagerung zwischen dem Antrieb und der Antriebsklinke stattfinden.

Gemäß einer weiteren vorteilhaften Ausführungsform der Reibkupplung ist die Antriebsklinke mittels des ersten Anschlags über einen Deckel der Reibkupplung justierbar.

Aufgrund der Aufteilung des Anschlagsabschnitts in einen ersten Anschlag und einen zweiten Anschlag ist es möglich, die Antriebsklinke über den ersten Anschlag in Zusammenwirkung mit dem Deckel der Reibkupplung zu justieren. Unabhängig davon kann die Lage des zweiten Anschlags zur Betätigungseinrichtung, beziehungsweise der Tellerfeder, eingerichtet werden. Im bisherigen Stand der Technik war der maximal mögliche Relativweg zwischen der Antriebsklinke und dem Antriebsritzel vom Abstand des Deckels zum Anschlag an der Antriebsklinke abhängig. Somit konnte eine Verschleißnachstellung erst dann beginnen, sobald der Abstand zwischen Deckel und Anschlag ausreichend groß ist. Dies hatte zur Folge, dass zum Beispiel bei maximaler Kupplungsscheibendicke die Tellerfeder einbaulageweit in Richtung Minimum verschoben ist und die Ausrückkraft sehr niedrig war. Zugleich war der Abstand zu gering und die Nachstellung konnte erst nach einem erheblichen Verschleiß des Reibbelags beginnen, so dass mit der Auftrennung des Anschlagsabschnitts in einen ersten und einen zweiten Anschlag kann nun der maximal mögliche Relativweg getrennt von der Lage zur Tellerfeder eingestellt werden.

Weiterhin wird ein Kraftfahrzeug vorgeschlagen, welches eine Antriebseinheit mit einer Abtriebswelle, einen Antriebsstrang und eine Reibkupplung gemäß der obigen Beschreibung zum lösbaren Verbinden der Abtriebswelle mit dem Antriebsstrang aufweist.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Kupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene Reibkupplung mit der Antriebsklinke ist trotz einer leicht montierbaren und leicht justierbaren Antriebsklinkenanordnung mit einer sehr geringen Baugröße ausführbar. Zugleich weist sie von Beginn an ein sehr gutes Ansprechverhalten auf Verschleiß an dem zumindest einen Reibbelag auf. Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: eine als bekannt angenommene Antriebsklinke,
- Fig. 2:: die Antriebsklinke aus Fig. 1 im seitlichen Schnitt,
- Fig. 3:: eine Antriebsklinke mit einem ersten und einem zweiten Anschlag,
- Fig. 4:: die Antriebsklinke gemäß Fig. 3 in einem seitlichen Schnitt,
- Fig. 5:: einen Antrieb mit elastischem Speicher,
- Fig. 6:: eine gedrückte Reibkupplung,
- Fig. 7:: eine gezogene Reibkupplung,
- Fig. 8:: ein Kraftfahrzeug mit Reibkupplung.

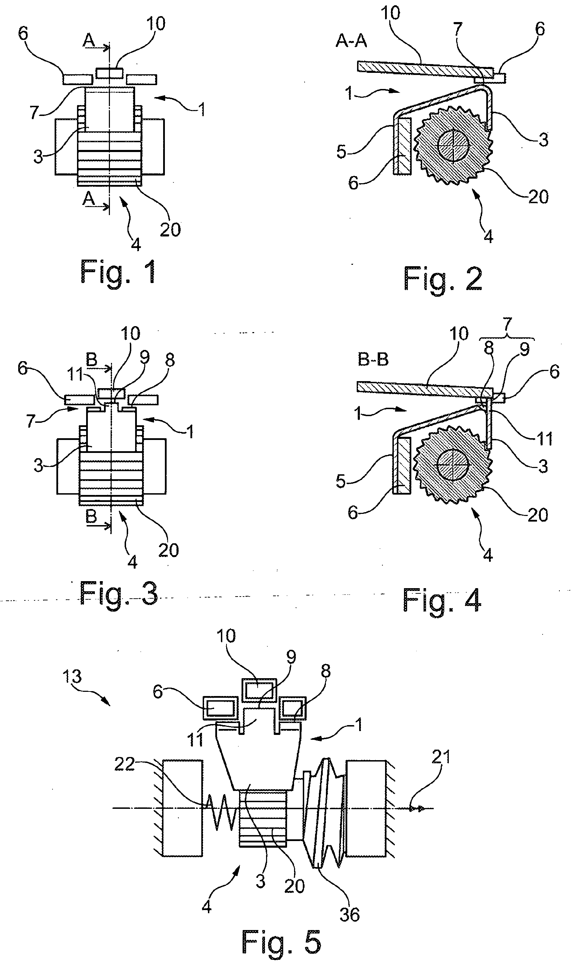

In Fig. 1 wird eine als bekannt angenommene Antriebsklinke 1 gezeigt, bei der der Anschlagsabschnitt 7 zugleich einen Anschlag zu einer axial fixierten Kupplungskomponente 6 und einer Betätigungseinrichtung 10 bildet. Der Klinkenabschnitt 3 greift in die Freilaufverzahnung 20 des Antriebsritzels 4 ein.

In Fig. 2 ist ein Schnitt A-A der Antriebsklinke 1 gezeigt, wie er in Fig. 1 gekennzeichnet ist, wobei hier die gleichen Bauteile mit gleichen Bezugszeichen bezeichnet sind. In dieser Ansicht ist ein Befestigungsabschnitt 5 zu erkennen, welcher an der axial fixierten Kupplungskomponente 6 befestigt ist.

In Fig. 3 ist ein Beispiel einer Antriebsklinke 1 gemäß der obigen Beschreibung dargestellt, bei der im Anschlagsabschnitt 7 ein erster Anschlag und ein zweiter Anschlag 9 gebildet sind. Der erste Anschlag 8 wirkt mit der axial fixierten Kupplungskomponente 6 zusammen und der zweite Anschlag 9 wirkt mit der Betätigungseinrichtung 10 zusammen. In diesem Fall ist der zweite Anschlag 9 durch eine Lasche 11 gebildet, welche aus dem Blechmaterial der Antriebsklinke 1 geformt ist. Im Übrigen greift der Klinkenabschnitt 3 in die Freilaufverzahnung 20 des Antriebsritzels 4 ein.

In Fig. 4 ist ein Schnitt B-B der Antriebsklinke 1 gezeigt, wie er in Fig. 3 gekennzeichnet ist, wobei hier die Ausbildung des zweiten Anschlags 9 durch das Ausformen einer Lasche 11 deutlich wird. Darüber hinaus ist der Befestigungsabschnitt 5 gezeigt, welcher mit einer axial fixierten Kupplungskomponenten 6 verbunden ist.

In Fig. 5 ist ein Ausführungsbeispiel einer Antriebsklinke 1 gemäß der obigen Beschreibung gezeigt, welche in einem Antrieb 13 angeordnet ist. Auch hier ist die Lasche 11 zur Bildung des zweiten Anschlags 9 neben dem ersten Anschlag 8 aus dem Blechmaterial der Antriebsklinke 1 mittig geformt. Der Klinkenabschnitt 3 wirkt auf die Freilaufverzahnung 20 des Antriebsritzels 4, wodurch zugleich mit der Freilaufrichtung 21 auch die Vortriebsrichtung des Rampenrings 14 definiert.

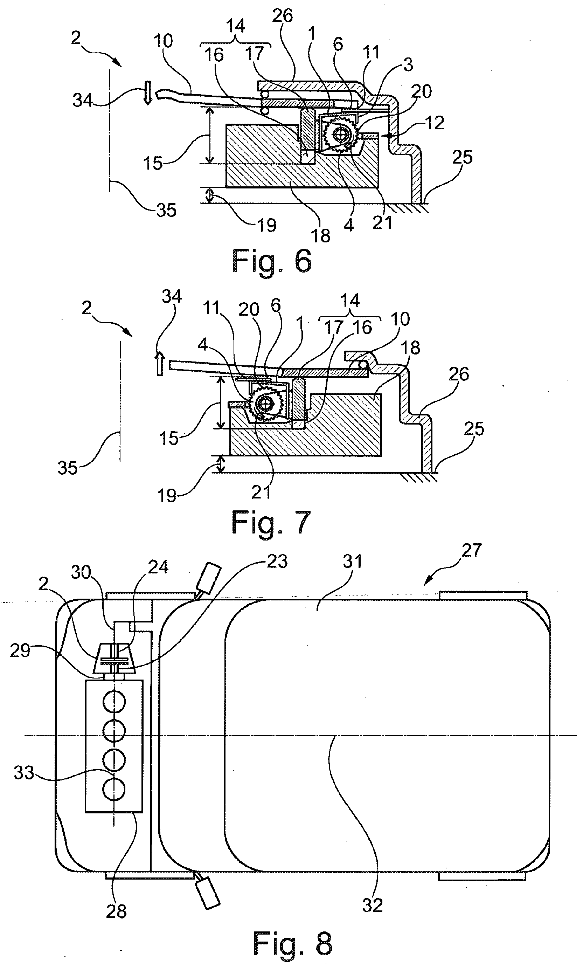

In Fig. 6 ist eine Reibkupplung 2 im Schnitt gezeigt, bei der auf der Anpressplatte 18 ein Rampenring 14 mit einer Gesamthöhe 15 angeordnet ist, welcher zugleich die Nocke für die Betätigungseinrichtung 10, hier eine Tellerfeder, bildet. Die Betätigungseinrichtung 10 wirkt ebenfalls auf eine Lasche 11 ein, so dass eine Antriebsklinke 1 bei einer Relativbewegung ein Antriebsritzel 4 mittels eines Klinkenabschnitts 3 und der Freilaufverzahnung 20 in Freilaufrichtung 21 verdreht und darüber das zweite Rampenelemente 17 gegenüber dem Rampenelement 16 relativ um die Rotationsachse 35 verdreht, so dass die Gesamthöhe 15 verändert wird. Darüber wird der maximale Schaltweg 19, welcher einen Abstand zwischen der Anpressplatte 18 und einer Gegenplatte 25 der Reibkupplung 2, zumindest gemäß der diskreten Abstände zwischen den Zähnen der Freilaufverzahnung 21, konstant gehalten wird. Diese Anordnung in der Reibkupplung 2 bildet die Verschleißnachstelleinrichtung 12. Die axial fixierte Kupplungskomponente 6 wird hierbei durch einen Kupplungsdeckel 26 gebildet. In dieser Fig. 6 ist eine sogenannte gedrückte Konfiguration der Reibkupplung 2 gezeigt, welche durch die Betätigungsrichtung 34 angeteigt ist, die die Betätigungseinrichtung 10 zum Betätigen in Richtung zur Gegenplatte 25 drückt.

In Fig. 7 ist eine dem System nach der in Fig. 6 gezeigten Reibkupplung 2 ähnliche Reibkupplung 2 gezeigt, wobei hier eine gezogene Variante gezeigt wird, welche durch die Betätigungsrichtung 34 angedeutet ist. Hier wird die Betätigungseinrichtung 10 zum Betätigen von der Gegenplatte 25 weggezogen. Außerdem ist hierbei das erste Rampenelement 16 durch die Anpressplatte 18 einstückig gebildet, welches durch die gestrichelte Darstellung angedeutet ist. Angepasst an die umgekehrte Betätigungsrichtung 34 ist die ansonsten identische Antriebsklinke 11 umgedreht an dem Antriebsritzel 4 angeordnet. Im Übrigen sind die gezeigten Elemente funktionsidentisch und baugleich.

In Fig. 8 wird ein Kraftfahrzeug 27 mit einer Antriebseinheit 28 gezeigt, welche hier als Verbrennungskraftmaschine angedeutet ist. Die Antriebseinheit 28 ist über ihre Abtriebswelle 29 mittels einer Reibkupplung 2 mit einem rein schematisch dargestellten Antriebsstrang 30 lösbar verbunden. In der Reibkupplung 2 ist die Abtriebswelle 29 über die Eingangswelle 23 mit der Ausgangswelle 24 lösbar verbindbar, welche mit dem Antriebsstrang 30 verbunden ist. Die Antriebseinheit 28 sowie die Reibkupplung 2 befinden sich in dem Kraftfahrzeug 27 vor der Fahrerkabine 31 und mit ihrer Motorachse 33 quer zur Längsachse 32 des Kraftfahrzeugs.

Mit der hier vorgeschlagenen Antriebsklinke können eine Verschleißnachstelleinrichtung beziehungsweise ein Antrieb leichter eingestellt werden. Darüber hinaus kann bereits bei voller Reibbelagdicke ohne zeitliche Verzögerung direkt eine Verschleißnachstellung stattfinden.

## Patentansprüche

1. Reibkupplung (2) zum lösbaren Verbinden einer Eingangswelle (23) mit einer Ausgangswelle (24), wobei die Reibkupplung (2) durch Ziehen oder Drücken einer Anpressplatte (18) mittels einer Betätigungseinrichtung (10) lösbar oder schließbar ist, und umfassend eine Verschleißnachstelleinrichtung (12) zum Ausgleichen von Reibbelagabrieb, aufweisend zumindest die folgenden Komponenten:
- einen Antrieb (13) zum Verdrehen eines Rampenrings (14) mit einer Gesamthöhe (15), wobei ein erstes Rampenelement (16) und ein zweites Rampenelement (17) auf einer Anpressplatte (18) angeordnet sind, welche Rampenelemente (16,17) derart zusammenwirken, dass bei einer relativen Verdrehung der Rampenelemente (16,17) gegeneinander die Gesamthöhe (15) veränderlich ist, so dass ein maximaler Schaltweg (19) nahezu konstant bleibt;
- ein Antriebsritzel (4) mit Freilaufverzahnung (20) zum Bewegen des Antriebs (13);
- eine Antriebsklinke (1) zum Eingreifen in die Freilaufverzahnung (20), wobei die Antriebsklinke (1) derart angeordnet ist, dass beim Überschreiten eines maximalen Schaltwegs (19) das Antriebsritzel (4) in Freilaufrichtung (21) verdreht wird, und aufweisend einen Klinkenabschnitt (3) zum Eingreifen in ein Antriebsritzel (4), einen Befestigungsabschnitt (5) zum Befestigen an einer axial fixierten Kupplungskomponente (6) und einen Anschlagabschnitt (7) zum Definieren der Position des Klinkenabschnitts (3), wobie die Antriebsklinke mit ihrem Anschlagabschnitt in einem äußeren Bereich an einer axial fixierten Kupplungskomponente an liegt, und in einem mittigen Bereich die Betätigungseinrichtung auf der Anschlagabschnitt wirkt, der Anschlagabschnitt (7) einen ersten Anschlag (8) und einen zweiten Anschlag (9) umfasst, **dadurch gekennzeichnet, dass** die Antriebsklinke aus einem Federstahlblechstreifen geformt ist, wobei der erste Anschlag (8) eine Position relativ zu der axial fixierten Kupplungskomponente (6) definiert und der zweite Anschlag (9) als ausgestanzte, über den ersten Anschlag (8) hinausragende Lasche (11) ausbildet ist, die dazu eingerichtet ist, mit der Betätigungseinrichtung (10) zusammenzuwirken.

2. Reibkupplung (2) nach Anspruch 1, wobei die Lasche (11) des zweiten Anschlags (9) im Bereich des ersten Anschlags (8) gebildet ist.

3. Reibkupplung (2) nach Anspruch 1 oder 2, wobei eine Verstellung des Antriebsritzels (4) über einen elastischen Speicher (22) beim Einrücken gespeichert wird und beim Ausrücken in eine Verdrehung des Rampenrings (14) umgesetzt wird, wobei der Rampenring (14) beim Einrücken geklemmt und beim Ausrücken gelöst ist.

4. Reibkupplung (2) nach einem der Ansprüche 1 bis 3, wobei die Antriebsklinke (1) an einem der beiden Rampenelemente (16,17) angeordnet ist, bevorzugt an dem angetriebenen Rampenelement (17).

5. Reibkupplung (2) nach einem der Ansprüche 1 bis 4, wobei der Antrieb (13) der Verschleißnachstelleinrichtung (12) an einem Deckel (26) der Reibkupplung (2) fixiert ist.

6. Reibkupplung (2) nach Anspruch 5, wobei die Antriebsklinke (1) mittels des ersten Anschlags (8) über den Deckel (26) der Reibkupplung (2) justierbar ist.

7. Kraftfahrzeug (27) aufweisend eine Antriebseinheit (28) mit einer Abtriebswelle (29), einen Antriebsstrang (30) und eine Reibkupplung (2) nach einem der Ansprüche 1 bis 6 zum lösbaren Verbinden der Abtriebswelle (29) mit dem Antriebsstrang (30).

## Claims

1. Friction clutch (2) for releasably connecting an input shaft (23) to an output shaft (24), it being possible for the friction clutch (2) to be released or closed by way of a pressure plate (18) being pulled or pressed by means of an actuating device (10), and comprising a wear adjustment device (12) for compensating for friction pad abrasion, having at least the following components:
- a drive (13) for rotating a ramp ring (14) with an overall height (15), a first ramp element (16) and a second ramp element (17) being arranged on a pressure plate (18), which ramp elements (16, 17) interact in such a way that the overall height (15) is variable in the case of a relative rotation of the ramp elements (16, 17) with respect to one another, with the result that a maximum switching travel (19) remains virtually constant;
- a drive pinion (4) with a freewheel toothing system (20) for moving the drive (13);
- a drive pawl (1) for engaging into the freewheel toothing system (20), the drive pawl (1) being arranged in such a way that the drive pinion (4) is rotated in the freewheel direction (21) if a maximum switching travel (19) is exceeded, and having a pawl section (3) for engaging into a drive pinion (4), a fastening section (5) for fastening to an axially fixed clutch component (6), and a stop section (7) for defining the position of the pawl section (3), the drive pawl bearing with its stop section against an axially fixed clutch component in an outer region, and the actuating device acting on the stop section in a central region, the stop section (7) comprising a first stop (8) and a second stop (9), **characterized in that** the drive pawl is formed from a spring steel strip, the first stop (8) defining a position relative to the axially fixed clutch component (6), and the second stop (9) being configured as a lug (11) which is punched out, protrudes beyond the first stop (8) and is set up to interact with the actuating device (10).

2. Friction clutch (2) according to Claim 1, the lug (11) of the second stop (9) being formed in the region of the first stop (8).

3. Friction clutch (2) according to Claim 1 or 2, an adjustment of the drive pinion (4) being stored via an elastic store (22) during engagement and being converted into a rotation of the ramp ring (14) during disengagement, the ramp ring (14) being clamped during engagement and being released during disengagement.

4. Friction clutch (2) according to one of Claims 1 to 3, the drive pawl (1) being arranged on one of the two ramp elements (16, 17), preferably on the driven ramp element (17).

5. Friction clutch (2) according to one of Claims 1 to 4, the drive (13) of the wear adjustment device (12) being fixed on a cover (26) of the friction clutch (2).

6. Friction clutch (2) according to Claim 5, it being possible for the drive pawl (1) to be adjusted by means of the first stop (8) via the cover (26) of the friction clutch (2).

7. Motor vehicle (27) having a drive unit (28) with an output shaft (29), a drive train (30) and a friction clutch (2) according to one of Claims 1 to 6 for releasably connecting the output shaft (29) to the drive train (30).

## Revendications

1. Embrayage à friction (2) pour la connexion desserrable d'un arbre d'entrée (23) à un arbre de sortie (24), l'embrayage à friction (2) pouvant être ouvert ou fermé au moyen d'un dispositif d'actionnement (10) par traction ou poussée d'une plaque de pressage (18), et comprenant un dispositif de rattrapage de l'usure (12) pour compenser l'usure des garnitures de frein, présentant au moins les composants suivantes :
- un entraînement (13) pour faire tourner une bague à rampe (14) ayant une hauteur totale (15), un premier élément de rampe (16) et un deuxième élément de rampe (17) étant disposés sur une plaque de pressage (18), lesquels éléments de rampe (16, 17) coopèrent de telle sorte que lors d'une rotation relative des éléments de rampe (16, 17) l'un par rapport à l'autre, la hauteur totale (15) puisse être modifiée de telle sorte qu'une course de commutation maximale (19) reste approximativement constante ;
- un pignon d'entraînement (4) avec une denture de roue libre (20) pour le déplacement de l'entraînement (13) ;
- un cliquet d'entraînement (1) pour l'engagement dans la denture de roue libre (20), le cliquet d'entraînement (1) étant disposé de telle sorte que lors du dépassement d'une course de commutation maximale (19), le pignon d'entraînement (4) soit tourné dans la direction de roue libre (21), et présentant une portion de cliquet (3) pour s'engager dans un pignon d'entraînement (4), une portion de fixation (5) pour la fixation à un composant d'embrayage fixé axialement (6) et une portion de butée (7) pour définir la position de la portion de cliquet (3),
le cliquet d'entraînement s'appliquant avec sa portion de butée dans une région extérieure contre un composant d'embrayage fixé axialement et, dans une région centrale, le dispositif d'actionnement agissant sur la portion de butée,
la portion de butée (7) comprenant une première butée (8) et une deuxième butée (9), **caractérisé en ce que** le cliquet d'entraînement est formé d'une bande de tôle en acier à ressort, la première butée (8) définissant une position par rapport au composant d'embrayage fixé axialement (6) et la deuxième butée (9) étant réalisée sous forme de patte estampée (11), faisant saillie au-delà de la première butée (8), laquelle est prévue pour coopérer avec le dispositif d'actionnement (10).

2. Embrayage à friction (2) selon la revendication 1, dans lequel la patte (11) de la deuxième butée (9) est formée dans la région de la première butée (8).

3. Embrayage à friction (2) selon la revendication 1 ou 2, dans lequel un réglage du pignon d'entraînement (4) est mémorisé par le biais d'une mémoire élastique (22) lors de l'embrayage et est converti, lors du débrayage, en une rotation de la bague à rampe (14), la bague à rampe (14) étant serrée lors de l'embrayage et étant desserrée lors du débrayage.

4. Embrayage à friction (2) selon l'une quelconque des revendications 1 à 3, dans lequel le cliquet d'entraînement (1) est disposé au niveau de l'un des deux éléments de rampe (16, 17), de préférence au niveau de l'élément de rampe entraîné (17).

5. Embrayage à friction (2) selon l'une quelconque des revendications 1 à 4, dans lequel l'entraînement (13) du dispositif de rattrapage de l'usure (12) est fixé au niveau d'un couvercle (26) de l'embrayage à friction (2).

6. Embrayage à friction (2) selon la revendication 5, dans lequel le cliquet d'entraînement (1) peut être ajusté au moyen de la première butée (8) par le biais du couvercle (26) de l'embrayage à friction (2).

7. Véhicule automobile (27) présentant une unité d'entraînement (28) comprenant un arbre de sortie (29), une chaîne cinématique (30) et un embrayage à friction (2) selon l'une quelconque des revendications 1 à 6, pour la connexion desserrable de l'arbre de sortie (29) à la chaîne cinématique (30).
